(19) Europäisches Patentamt / European Patent Office / Office européen des brevets

(11) **EP 4 361 888 A1**

(12) **DEMANDE DE BREVET EUROPEEN**

(43) Date de publication:
**01.05.2024 Bulletin 2024/18**

(21) Numéro de dépôt: **23205542.6**

(22) Date de dépôt: **24.10.2023**

(51) Classification Internationale des Brevets (IPC):
**G06N 3/063** (2023.01)    **G06N 3/0464** (2023.01)

(52) Classification Coopérative des Brevets (CPC):
**G06N 3/063; G06N 3/0464**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**KH MA MD TN**

(30) Priorité: **28.10.2022 FR 2211288**

(71) Demandeurs:
- **STMICROELECTRONICS (GRENOBLE 2) SAS
38000 Grenoble (FR)**

- **STMicroelectronics France
92120 Montrouge (FR)**

(72) Inventeurs:
- **HEINRICH, Vincent
38140 IZEAUX (FR)**
- **URARD, Pascal
38570 THEYS (FR)**
- **PAILLE, Bruno
38360 ENGINS (FR)**

(74) Mandataire: **Casalonga
Casalonga & Partners
Bayerstraße 71/73
80335 München (DE)**

(54) **CIRCUIT INTÉGRÉ CONFIGURÉ POUR EXECUTER UN RESEAU DE NEURONES ARTIFICIELS**

(57) Selon un aspect, il est proposé un circuit intégré comportant :
- une première mémoire (WMEM) configurée pour stocker des paramètres d'un réseau de neurones,
- une deuxième mémoire (DMEM) configurée pour stocker des données fournis en entrée du réseau de neurones ou générées par ce réseau de neurones,
- une unité de calcul (PEBK) configuré pour exécuter le réseau de neurones,
- un premier circuit à décalage par rotation (BS1), le premier circuit à décalage par rotation étant configuré pour transmettre les données de la deuxième mémoire à l'unité de calcul,
- un deuxième circuit à décalage par rotation (BS2), le deuxième circuit à décalage par rotation étant configuré pour délivrer les données générées par l'exécution du réseau de neurones par l'unité de calcul,
- une unité de contrôle (CTRL) configurée pour contrôler l'unité de calcul (PEBK) et les premier et deuxième circuits à décalage par rotation (BS1, BS2).

[Fig 2]

EP 4 361 888 A1

## Description

Des modes de réalisation et de mise en oeuvre concernent les réseaux de neurones artificiels.

Les réseaux de neurones artificiels sont utilisés pour réaliser des fonctions données lorsqu'ils sont exécutés. Par exemple, une fonction d'un réseau de neurones peut être une classification. Une autre fonction peut consister à générer un signal à partir d'un signal reçu en entrée.

Les réseaux de neurones artificiels comprennent généralement une succession de couches de neurones.

Chaque couche prend en entrée des données auxquelles des poids sont appliqués et délivre en sortie des données de sortie après traitement par des fonctions d'activation des neurones de ladite couche. Ces données de sortie sont transmises à la couche suivante dans le réseau de neurones. Les poids sont des paramètres configurables pour obtenir de bonnes données de sortie.

Les réseaux de neurones peuvent par exemple être mis en oeuvre par des plateformes matérielles finales, telles que des microcontrôleurs intégrés dans des objets connectés ou dans des circuits dédiés spécifiques.

Les réseaux de neurones sont généralement entraînés lors d'une phase d'apprentissage avant d'être intégré dans la plateforme matérielle finale. La phase d'apprentissage peut être supervisée ou non. La phase d'apprentissage permet d'ajuster les poids du réseau de neurones pour obtenir de bonnes données en sortie du réseau de neurones. Pour ce faire, le réseau de neurones peut être exécuté en prenant en entrée des données déjà classifiées d'une base de données de référence. Les poids sont adaptés en fonction des données obtenues en sortie du réseau de neurones par rapport à des données attendues.

L'exécution d'un réseau de neurones entraîné par un circuit intégré requiert une manipulation d'une quantité importante de données.

Cette manipulation des données peut entraîner une consommation importante d'énergie, notamment lorsque le circuit intégré doit effectuer de nombreux accès mémoire en écriture ou en lecture.

Ces circuits intégrés utilisés pour mettre en oeuvre des réseaux de neurones sont donc généralement consommateur d'énergie et ont une structure complexe et encombrante. En outre, ces circuits intégrés sont peu flexibles en matière de parallélisation de l'exécution du réseau de neurones.

Il existe donc un besoin de proposer un circuit intégré permettant d'exécuter rapidement un réseau de neurones tout en réduisant la consommation d'énergie nécessaire pour exécuter un réseau de neurones artificiels. Il existe également un besoin de proposer un tel circuit intégré qui ait une structure simple de façon à réduire ses dimensions.

Selon un aspect, il est proposé un circuit intégré comportant :

- une première mémoire configurée pour stocker des paramètres d'un réseau de neurones à exécuter,
- une deuxième mémoire configurée pour stocker des données fournies en entrée du réseau de neurones à exécuter ou générées par ce réseau de neurones,
- une unité de calcul configurée pour exécuter le réseau de neurones,
- un premier circuit à décalage par rotation entre une sortie de la deuxième mémoire et l'unité de calcul, le premier circuit à décalage par rotation étant configuré pour transmettre les données de la sortie de la deuxième mémoire à l'unité de calcul,
- un deuxième circuit à décalage par rotation entre l'unité de calcul et la deuxième mémoire, le deuxième circuit à décalage par rotation étant configuré pour délivrer les données générées lors de l'exécution du réseau de neurones par l'unité de calcul,
- une unité de contrôle configurée pour contrôler l'unité de calcul et les premier et deuxième circuits à décalage par rotation.

Un tel circuit intégré présente l'avantage d'intégrer des mémoires pour le stockage des paramètres du réseau de neurones (ces paramètres incluant les poids du réseau de neurones mais aussi sa topologie, c'est-à-dire le nombre et le type de couches), des données d'entrée du réseau de neurones et des données générées en sortie des différentes couches du réseau de neurones. Ainsi, les mémoires peuvent être accédées directement par l'unité de calcul du circuit intégré, et ne sont pas partagées au travers d'un bus. Un tel circuit intégré permet donc de réduire le déplacement des paramètres de la première mémoire et les données de la deuxième mémoire. Cela permet de rendre plus rapide l'exécution du réseau de neurones artificiels.

L'utilisation d'une mémoire pour stocker les paramètres du réseau de neurones permet l'adaptabilité du circuit à la tâche à réaliser (les poids ainsi que la topologie du réseau de neurones étant programmables)

En outre, l'utilisation de circuits à décalage par rotation permet une manipulation des données peu consommatrice d'énergie. En particulier, le premier circuit à décalage par rotation permet de lire simplement les données stockées dans la deuxième mémoire lorsque ces données sont nécessaires à l'exécution du réseau de neurones par l'unité de calcul. Le deuxième circuit à décalage par rotation permet d'écrire simplement dans la deuxième mémoire les données générées par l'unité de calcul lors de l'exécution du réseau de neurones. Les circuits à décalage par rotation sont dimensionnés de sorte que, pour l'exécution du réseau de neurones, des données utiles puissent être écrites dans ces circuits sur des données, dès que ces dernières données ne sont plus utiles pour l'exécution du réseau de neurones.

Les données et les poids étant placés dans les mémoires du circuit intégré peuvent être accédées à chaque coup d'horloge du circuit intégré.

Un tel circuit intégré présente une structure simple et peu encombrante, et peu consommatrice d'énergie, notamment grâce à l'utilisation de circuits à décalage par rotation à la place d'une utilisation d'un circuit d'interconnexion en croix (connu également par le terme anglosaxon « crossbar »).

Dans un mode de réalisation avantageux, l'unité de calcul comprend un banc d'éléments de traitement configuré pour paralléliser l'exécution du réseau de neurones, le premier circuit à décalage par rotation étant configuré pour transmettre les données de la deuxième mémoire aux différents éléments de traitement.

Un tel circuit intégré permet une parallélisation des opérations lors de l'exécution du réseau de neurones.

De préférence, le circuit intégré comporte en outre un premier étage multiplexeur, le premier circuit à décalage par rotation étant relié à la deuxième mémoire par l'intermédiaire du premier étage multiplexeur, le premier étage multiplexeur étant configuré pour délivrer au premier circuit à décalage par rotation un vecteur de données à partir des données stockées dans la deuxième mémoire, le premier circuit à décalage par rotation étant configuré pour décaler le vecteur de données du premier étage multiplexeur.

Avantageusement, le circuit intégré comporte en outre un deuxième étage multiplexeur, l'unité de calcul étant reliée au premier circuit à décalage par rotation par l'intermédiaire du deuxième étage multiplexeur, le deuxième étage multiplexeur étant configuré pour délivrer le vecteur de données décalé par le premier circuit à décalage par rotation à l'unité de calcul.

Dans un mode de réalisation avantageux, le circuit intégré comporte en outre une mémoire tampon, le deuxième circuit à décalage par rotation étant relié à l'unité de calcul par l'intermédiaire de la mémoire tampon, la mémoire tampon étant configurée pour stocker temporairement les données générées par l'unité de calcul lors de l'exécution du réseau de neurones avant que le deuxième circuit à décalage par rotation délivre ces données à la deuxième mémoire. Par exemple, cette mémoire tampon peut être réalisée par une mémoire physique ou bien par un élément de stockage temporaire (bascule).

De préférence, le circuit intégré comporte en outre un étage d'élagage entre la mémoire tampon et le deuxième circuit à décalage par rotation, l'étage d'élagage étant configuré pour supprimer des données, notamment des données inutiles, parmi les données générées par l'unité de calcul.

Avantageusement, la deuxième mémoire est configurée pour stocker des matrices de données fournies en entrée du réseau de neurones à exécuter ou générées par ce réseau de neurones, chaque matrice de donnée pouvant présenter plusieurs canaux de données, les données de chaque matrice de données étant regroupées dans la deuxième mémoire dans au moins un groupe de donnée, les groupes de données étant stockés dans différents bancs de la deuxième mémoire, les données de chaque groupe de données étant destinées à être traitées en parallèle par les différents éléments de traitement de l'unité de calcul.

Les matrices de données peuvent être des images reçues en entrée du réseau de neurones par exemple. La position des données correspond alors à des pixels de l'image. Les matrices de données peuvent également correspondre à une carte de caractéristiques générée par l'exécution d'une couche du réseau de neurones par l'unité de calcul (connue également par les termes anglosaxons « feature map » et « activation map »).

Le placement des données et des paramètres du réseau de neurones dans la première mémoire et la deuxième mémoire du circuit intégré permet un accès aux données nécessaires à l'exécution du réseau de neurones à chaque coup d'horloge du circuit intégré.

Dans un mode de réalisation avantageux, chaque groupe de données d'une matrice de données comporte des données d'au moins une position de la matrice de données pour au moins un canal de la matrice de données.

Un tel circuit intégré est ainsi adapté pour paralléliser l'exécution du réseau de neurones en largeur (sur les différentes positions des données dans la matrice de données) et en profondeur (sur les différents canaux des matrices de données). En particulier, l'unité de calcul peut comprendre un banc d'éléments de traitement configuré pour paralléliser en largeur et en profondeur l'exécution du réseau de neurones.

Selon un autre aspect, il est proposé un système sur puce comportant un circuit intégré tel que décrit précédemment.

Un tel système sur puce présente l'avantage de pouvoir exécuter un réseau de neurones artificiel en utilisant seulement le circuit intégré. Un tel système sur puce ne requiert donc pas d'interventions d'un microcontrôleur du système sur puce pour l'exécution du réseau de neurones. Un tel système sur puce ne requiert pas non plus l'utilisation d'un bus commun du système sur puce pour l'exécution du réseau de neurones. Ainsi, le réseau de neurones artificiel peut être exécuté plus rapidement, plus simplement tout en réduisant la consommation d'énergie requise à son exécution.

D'autres avantages et caractéristiques de l'invention apparaîtront à l'examen de la description détaillée de modes de réalisation, nullement limitatifs, et des dessins annexés sur lesquels :

[Fig 1]
[Fig 2]

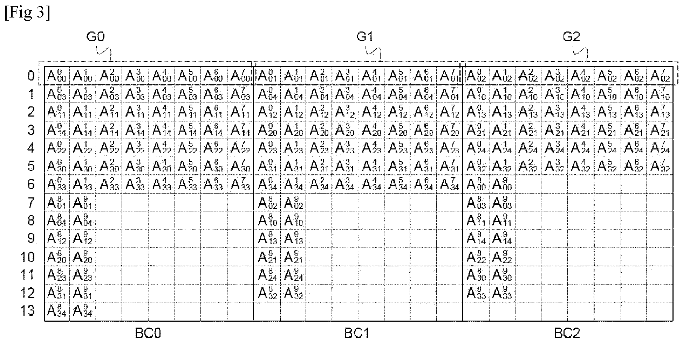

[Fig 3] illustrent des modes de réalisation et de mise en oeuvre de l'invention.

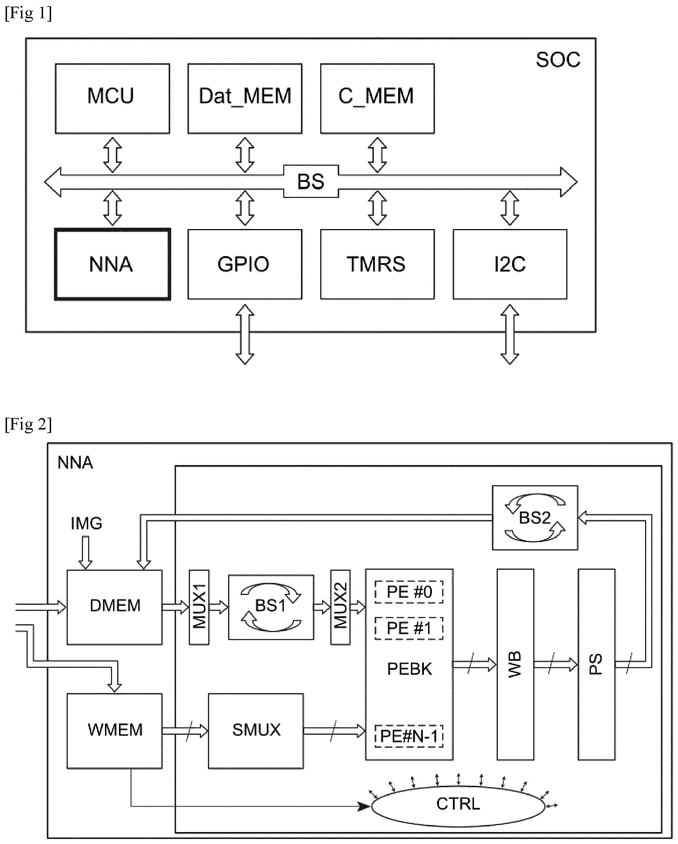

La figure 1 illustre un mode de réalisation d'un système sur puce SOC. Le système sur puce comporte classiquement un microcontrôleur MCU, une mémoire de données Dat_MEM, au moins une mémoire de code C_MEM, un circuit de mesure de temps TMRS (en anglais « timer »), des ports d'Entrée-sortie à usage général GPIO, et un port de communication I2C.

Le système sur puce SOC comporte également un circuit intégré NNA pour la mise en oeuvre de réseaux de neurones artificiels. Un tel circuit intégré NNA peut également être désigné par l'expression « circuit d'accélération de réseaux de neurones ».

Le système sur puce SOC comprend également des bus permettant d'interconnecter les différents éléments du système sur puce SOC.

La figure 2 illustre un mode de réalisation du circuit intégré NNA pour la mise en oeuvre de réseaux de neurones.

Ce circuit intégré NNA comporte une unité de calcul PEBK. L'unité de calcul PEBK comporte un banc d'au moins un élément de traitement PE. De préférence, l'unité de calcul PEBK comporte plusieurs éléments de traitement PE#0, PE#1, ..., PE#N-1. Chaque élément de traitement PE est configuré pour effectuer des opérations élémentaires pour l'exécution du réseau de neurones. Par exemple, chaque élément de traitement PE est configuré pour effectuer des opérations élémentaires de convolution, de réduction de dimension (en anglais « pooling »), de mise à échelle (en anglais « scaling », de fonctions d'activation du réseau de neurones.

Le circuit intégré NNA comporte en outre une première mémoire WMEM configurée pour stocker des paramètres du réseau de neurones à exécuter, notamment des poids et une configuration du réseau de neurones (notamment sa topologie). La première mémoire WMEM est configurée pour recevoir les paramètres du réseau de neurones à exécuter avant la mise en oeuvre du réseau de neurones depuis la mémoire de données Dat_MEM du système sur puce. La première mémoire WMEM peut être une mémoire volatile.

Le circuit intégré comporte en outre un étage de décalage SMUX présentant des entrées connectées aux sorties de la première mémoire WMEM. L'étage de décalage SMUX est ainsi configuré pour recevoir les paramètres du réseau de neurones à exécuter stockés dans la première mémoire WMEM. L'étage de décalage SMUX comporte également des sorties connectées à des entrées de l'unité de calcul PEBK. De la sorte, l'unité de calcul PEBK est configurée pour recevoir les paramètres du réseau de neurones pour pouvoir l'exécuter. En particulier, l'étage de décalage SMUX est configuré pour sélectionner les poids et des données de configuration dans la mémoire pour les délivrer à l'unité de calcul PEBK, et plus particulièrement aux différents éléments de traitement PE.

Le circuit intégré NNA comporte également une deuxième mémoire DMEM configurée pour stocker des données fournies au réseau de neurones à exécuter ou générées lors de son exécution par l'unité de calcul PEBK. Ainsi, les données peuvent par exemple être des données d'entrée du réseau de neurones ou des données (désignées également par le terme anglosaxon « activation ») générées en sortie des différentes couches du réseau de neurones. La deuxième mémoire DMEM peut être une mémoire volatile.

Le circuit intégré NNA comporte en outre un premier étage multiplexeur MUX1. Le premier étage multiplexeur MUX1 comporte des entrées connectées à la deuxième mémoire DMEM. Le premier étage multiplexeur MUX1 est configuré pour délivrer un vecteur de données à partir des données stockées dans la deuxième mémoire DMEM.

Le circuit intégré NNA comporte en outre un premier circuit à décalage par rotation BS1 (connu également par l'expression anglosaxonne « barrel shifter »). Le premier circuit à décalage par rotation BS1 présente des entrées connectées aux sorties du premier étage multiplexeur MUX1. Le premier circuit à décalage par rotation BS1 est ainsi configuré pour pouvoir recevoir les données transmises par le premier étage multiplexeur MUX1. Le premier circuit à décalage par rotation BS1 est configuré pour décaler le vecteur de données du premier étage multiplexeur MUX1. Le premier circuit à décalage par rotation BS1 présente des sorties configurées pour délivrer les données de ce premier circuit à décalage par rotation BS1.

Le circuit intégré NNA comporte également un deuxième étage multiplexeur MUX2. Ce deuxième étage multiplexeur MUX2 présente des entrées reliées aux sorties du premier circuit à décalage par rotation BS1. Le deuxième étage multiplexeur MUX2 comporte également des sorties connectées à des entrées de l'unité de calcul PEBK. Ainsi, l'unité de calcul PEBK est configurée pour recevoir les données du premier circuit à décalage par rotation BS1. Le deuxième étage multiplexeur MUX2 est configuré pour délivrer le vecteur de données décalé par le premier circuit à décalage par rotation BS1 à l'unité de calcul PEBK, de façon à transmettre les données du vecteur de données aux différents éléments de traitement PE.

Le circuit intégré NNA comporte en outre une mémoire tampon WB (en anglais « buffer ») en sortie de l'unité de calcul PEBK. La mémoire tampon WB comporte donc des entrées connectées à une sortie de l'unité de calcul PEBK. La mémoire tampon WB est ainsi configurée pour recevoir les données calculées par l'unité de calcul PEBK. En particulier, la mémoire tampon WB peut être un élément de stockage permettant de stocker un seul mot de données.

Le circuit intégré NNA comporte également un étage d'élagage PS (désigné également par l'expression anglosaxonne « pruning stage »). L'étage d'élagage PS comporte des entrées connectées à des sorties de la mémoire tampon WB. Cet étage d'élagage PS est configuré pour supprimer les données inutiles délivrées par l'unité de calcul PEBK. L'étage d'élagage PS étant configuré pour supprimer certaines données inutiles générées par l'unité de calcul PEBK. En particulier, des données générées par l'unité de calcul PEBK sont inutiles lorsque l'exécution du réseau de neurones présente un pas (en anglais « stride ») supérieur à un.

Le circuit intégré NNA comporte également un deuxième circuit à décalage par rotation BS2. Le deuxième circuit à décalage par rotation BS2 présente des entrées reliées à des sorties de l'étage d'élagage PS. Le deuxième circuit à décalage par rotation BS2 présente des sorties connectées à des entrées de la deuxième mémoire DMEM. Le deuxième circuit à décalage par rotation BS2 est configuré pour décaler le vecteur de données délivré par l'étage d'élagage PS avant de les stocker dans la deuxième mémoire DMEM.

Le circuit intégré NNA comporte en outre une unité de contrôle CTRL configurée pour contrôler les différents éléments du circuit intégré NNA, c'est-à-dire, l'étage de décalage SMUX, le premier étage multiplexeur MUX1, le premier circuit à décalage par rotation BS1, le deuxième étage multiplexeur MUX2, l'unité de calcul PEBK, la mémoire tampon WB, l'étage d'élagage PS, le deuxième circuit à décalage par rotation BS2 ainsi que les accès à la première mémoire WMEM et à la deuxième mémoire DMEM. En particulier, l'unité de control CTRL n'accède qu'aux données utiles de la première mémoire WMEM et de la deuxième mémoire DMEM.

La figure 3 illustre un mode de réalisation d'agencement de la deuxième mémoire DMEM. La mémoire DMEM comporte plusieurs bancs de données. Ici, la mémoire DMEM comporte trois bancs de données. Le nombre de bancs est supérieur ou égal à une capacité de parallélisation en largeur par les éléments de traitement de l'unité de calcul (c'est-à-dire une parallélisation sur un nombre de positions d'un même canal d'une matrice de donnée). Chaque banc est représenté en tableau présentant un nombre prédéfini de lignes et de colonnes. Ici, la mémoire est configurée pour enregistrer des données d'une matrice de données, par exemple une image ou une carte de caractéristiques, ayant plusieurs canaux. Les données de la matrice sont stockées dans les différents bancs de la mémoire DMEM. Ici, la matrice de données présente quatre lignes, cinq colonnes et dix canaux.

Chaque donnée de la matrice présente une valeur $A_{xy}^c$, où c va de 0 à 9 et indique le canal de cette donnée de la matrice, x et y indiquent la position de la donnée dans la matrice, x allant de 0 à 3 et correspondant à la ligne de la matrice, et y allant de 0 à 4 et correspondant à la colonne de la matrice.

Les données de la matrice sont stockées par groupes dans les différents bancs de la mémoire DMEM. En particulier, chaque groupe de données d'une matrice de données comporte des données d'au moins une position de la matrice de données et d'au moins un canal de la matrice de données. Le nombre maximal de données de chaque groupe est défini selon une capacité de parallélisation en profondeur (c'est-à-dire une parallélisation sur un certain nombre de canaux de la matrice) de l'exécution du réseau de neurones par l'unité de calcul.

Le nombre d'éléments de traitement PEKB correspond à une parallélisation maximale pour l'exécution du réseau de neurones, c'est-à-dire à une parallélisation en largeur multipliée par une parallélisation sur les différents canaux des données. Ainsi, le nombre d'éléments de traitement PE peut être égal au nombre de bancs de la mémoire DMEM multiplié par le nombre de canaux de chaque banc de la mémoire DMEM. Cette parallélisation maximale n'est généralement pas utilisée tout le temps lors de l'exécution d'un réseau de neurone, notamment du fait de la réduction des dimensions des couches dans la profondeur du réseau de neurones.

Les groupes sont formées selon la capacité de parallélisation en largeur et en profondeur de l'unité de calcul. Par exemple, le groupe G0 comprend les données $A_{00}^0$ à $A_{00}^7$ dans le banc BC0, le groupe G1 comprend les données $A_{01}^0$ à $A_{01}^9$ dans le banc BC1, le groupe G2 comprend les données $A_{02}^0$ à $A_{02}^9$ dans le banc BC2.

Plus particulièrement, les données des différents canaux de la matrice ayant une même position dans la matrice sont stockées sur une même ligne d'un même banc. Si le nombre de canaux est supérieur au nombre de colonne d'un banc, alors il n'est pas possible de stocker sur une même ligne d'un banc, et donc dans un même groupe, toutes les données des canaux différents ayant une même position dans la matrice. Les données restantes sont alors stockées dans des lignes libres à la fin de chaque banc. Par exemple, les données $A_{00}^0$ à $A_{00}^7$ du groupe G0 sont stockées sur la ligne #0 du banc BC0, et les données $A_{00}^8$ et $A_{00}^9$ sont stockées à la ligne #6 du banc BC2.

Le premier circuit de décalage par rotation présente un nombre d'entrées égal au nombre de bancs de la mémoire DMEM et le deuxième circuit de décalage par rotation présente un nombre de sorties égal au nombre de bancs de la mémoire DMEM. De la sorte, le premier circuit de décalage par rotation est configuré pour recevoir les données des différents bancs.

L'utilisation de circuits à décalage par rotation BS1 et BS2 permet une manipulation des données peu consommatrice d'énergie. En effet, le premier circuit à décalage par rotation permet de lire simplement les données stockées dans la deuxième mémoire lorsque ces données sont nécessaires à l'exécution du réseau de neurones par l'unité de calcul. Le deuxième circuit à décalage par rotation permet quant à lui d'écrire simplement dans la deuxième mémoire les données générées par l'unité de calcul lors de l'exécution du réseau de neurones. Les circuits à décalage par rotation sont dimensionnés de sorte que, pour l'exécution du réseau de neurones, des données utiles puissent être écrites dans ces circuits sur des données, dès que ces dernières données ne sont plus utiles pour l'exécution du réseau de neurones.

Un tel arrangement des données de la matrice en mémoire permet donc de simplifier la manipulation des données à l'aide du premier circuit de décalage par rotation et du deuxième circuit de décalage de décalage par rotation. En outre, un tel arrangement des données de la matrice en mémoire permet un accès simple à la mémoire DMEM en lecture et en écriture

**Revendications**

1. Circuit intégré comportant :

   - une première mémoire (WMEM) configurée pour stocker des paramètres d'un réseau de neurones à exécuter,
   - une deuxième mémoire (DMEM) configurée pour stocker des données fournies en entrée du réseau de neurones à exécuter ou générées par ce réseau de neurones,
   - une unité de calcul (PEBK) configurée pour exécuter le réseau de neurones,
   - un premier circuit à décalage par rotation (BS1) entre une sortie de la deuxième mémoire (DMEM) et l'unité de calcul (PEBK), le premier circuit à décalage par rotation étant configuré pour transmettre les données de la sortie de la deuxième mémoire à l'unité de calcul,
   - un deuxième circuit à décalage par rotation (BS2) entre l'unité de calcul (PEBK) et la deuxième mémoire (DMEM), le deuxième circuit à décalage par rotation étant configuré pour délivrer les données générées lors de l'exécution du réseau de neurones par l'unité de calcul,
   - une unité de contrôle (CTRL) configurée pour contrôler l'unité de calcul (PEBK), les premier et deuxième circuits à décalage par rotation (BS1, BS2) ainsi que les accès à la première mémoire (WMEM) et à la deuxième mémoire (DMEM) .

2. Circuit intégré selon l'une des revendications 1, dans lequel l'unité de calcul (PEBK) comprend un banc d'éléments de traitement (PE#0, ..., PE#N-1) configuré pour paralléliser l'exécution du réseau de neurones, le premier circuit à décalage par rotation étant configuré pour transmettre les données de la deuxième mémoire aux différents éléments de traitement.

3. Circuit intégré selon l'une des revendications 1 ou 2 comportant en outre un premier étage multiplexeur (MUX1), le premier circuit à décalage par rotation (BS1) étant relié à la deuxième mémoire (DMEM) par l'intermédiaire du premier étage multiplexeur (MUX1), le premier étage multiplexeur (MUX1) étant configuré pour délivrer au premier circuit à décalage par rotation (BS1) un vecteur de données à partir des données stockées dans la deuxième mémoire (DMEM), le premier circuit à décalage par rotation (BS1) étant configuré pour décaler le vecteur de données du premier étage multiplexeur (MUX1).

4. Circuit intégré selon la revendication 3, comportant un deuxième étage multiplexeur (MUX2), l'unité de calcul (PEBK) étant reliée au premier circuit à décalage par rotation (BS1) par l'intermédiaire du deuxième étage multiplexeur (MUX2), le deuxième étage multiplexeur (MUX2) étant configuré pour délivrer le vecteur de données décalé par le premier circuit à décalage par rotation (BS1) à l'unité de calcul (PEBK).

5. Circuit intégré selon l'une des revendications 1 à 4, comportant en outre une mémoire tampon (WB), le deuxième circuit à décalage par rotation (BS2) étant relié à l'unité de calcul (PEBK) par l'intermédiaire de la mémoire tampon (WB), la mémoire tampon (WB) étant configurée pour stocker temporairement les données générées par l'unité de calcul (PEBK) lors de l'exécution du réseau de neurones avant que le deuxième circuit à décalage par rotation (BS2) délivre ces données à la deuxième mémoire (DMEM).

6. Circuit intégré selon la revendication 5, comportant en outre un étage d'élagage (PS) entre la mémoire tampon (WB) et le deuxième circuit à décalage par rotation (BS2), l'étage d'élagage (PS) étant configuré pour supprimer certaines données parmi les données générées par l'unité de calcul (PEBK).

7. Circuit intégré selon l'une des revendications 1 à 6 dans lequel la deuxième mémoire (DMEM) est configurée pour stocker des matrices de données fournis en entrée du réseau de neurones à exécuter ou générées par ce réseau de neurones, chaque matrice de donnée pouvant présenter plusieurs canaux de données, les données de chaque matrice de données étant regroupées dans la deuxième mémoire (DMEM) dans au moins un groupe de données, les groupes de données étant stockés dans différents bancs de la deuxième mémoire (DMEM), les données de chaque groupe de données étant destinées à être traitées en parallèle par les différents éléments de traitement de l'unité de calcul (PEBK).

8. Circuit intégré selon la revendication 7 dans lequel chaque groupe de données d'une matrice de données comporte des données d'au moins une position de la matrice de données pour au moins un canal de la matrice de données.

9. Système sur puce comportant un circuit intégré selon l'une des revendications 1 à 8.

[Fig 1]

[Fig 2]

[Fig 3]

G0      G1      G2

| | BC0 | | | | | | | | BC1 | | | | | | | | BC2 | | | | | | | |
|---|---|---|---|---|---|---|---|---|---|---|---|---|---|---|---|---|---|---|---|---|---|---|---|---|
| 0 | $A_{00}^0$ | $A_{00}^1$ | $A_{00}^2$ | $A_{00}^3$ | $A_{00}^4$ | $A_{00}^5$ | $A_{00}^6$ | $A_{00}^7$ | $A_{01}^0$ | $A_{01}^1$ | $A_{01}^2$ | $A_{01}^3$ | $A_{01}^4$ | $A_{01}^5$ | $A_{01}^6$ | $A_{01}^7$ | $A_{02}^0$ | $A_{02}^1$ | $A_{02}^2$ | $A_{02}^3$ | $A_{02}^4$ | $A_{02}^5$ | $A_{02}^6$ | $A_{02}^7$ |
| 1 | $A_{03}^0$ | $A_{03}^1$ | $A_{03}^2$ | $A_{03}^3$ | $A_{03}^4$ | $A_{03}^5$ | $A_{03}^6$ | $A_{03}^7$ | $A_{04}^0$ | $A_{04}^1$ | $A_{04}^2$ | $A_{04}^3$ | $A_{04}^4$ | $A_{04}^5$ | $A_{04}^6$ | $A_{04}^7$ | $A_{10}^0$ | $A_{10}^1$ | $A_{10}^2$ | $A_{10}^3$ | $A_{10}^4$ | $A_{10}^5$ | $A_{10}^6$ | $A_{10}^7$ |
| 2 | $A_{11}^0$ | $A_{11}^1$ | $A_{11}^2$ | $A_{11}^3$ | $A_{11}^4$ | $A_{11}^5$ | $A_{11}^6$ | $A_{11}^7$ | $A_{12}^0$ | $A_{12}^1$ | $A_{12}^2$ | $A_{12}^3$ | $A_{12}^4$ | $A_{12}^5$ | $A_{12}^6$ | $A_{12}^7$ | $A_{13}^0$ | $A_{13}^1$ | $A_{13}^2$ | $A_{13}^3$ | $A_{13}^4$ | $A_{13}^5$ | $A_{13}^6$ | $A_{13}^7$ |
| 3 | $A_{14}^0$ | $A_{14}^1$ | $A_{14}^2$ | $A_{14}^3$ | $A_{14}^4$ | $A_{14}^5$ | $A_{14}^6$ | $A_{14}^7$ | $A_{20}^0$ | $A_{20}^1$ | $A_{20}^2$ | $A_{20}^3$ | $A_{20}^4$ | $A_{20}^5$ | $A_{20}^6$ | $A_{20}^7$ | $A_{21}^0$ | $A_{21}^1$ | $A_{21}^2$ | $A_{21}^3$ | $A_{21}^4$ | $A_{21}^5$ | $A_{21}^6$ | $A_{21}^7$ |
| 4 | $A_{22}^0$ | $A_{22}^1$ | $A_{22}^2$ | $A_{22}^3$ | $A_{22}^4$ | $A_{22}^5$ | $A_{22}^6$ | $A_{22}^7$ | $A_{23}^0$ | $A_{23}^1$ | $A_{23}^2$ | $A_{23}^3$ | $A_{23}^4$ | $A_{23}^5$ | $A_{23}^6$ | $A_{23}^7$ | $A_{24}^0$ | $A_{24}^1$ | $A_{24}^2$ | $A_{24}^3$ | $A_{24}^4$ | $A_{24}^5$ | $A_{24}^6$ | $A_{24}^7$ |
| 5 | $A_{30}^0$ | $A_{30}^1$ | $A_{30}^2$ | $A_{30}^3$ | $A_{30}^4$ | $A_{30}^5$ | $A_{30}^6$ | $A_{30}^7$ | $A_{31}^0$ | $A_{31}^1$ | $A_{31}^2$ | $A_{31}^3$ | $A_{31}^4$ | $A_{31}^5$ | $A_{31}^6$ | $A_{31}^7$ | $A_{32}^0$ | $A_{32}^1$ | $A_{32}^2$ | $A_{32}^3$ | $A_{32}^4$ | $A_{32}^5$ | $A_{32}^6$ | $A_{32}^7$ |
| 6 | $A_{33}^0$ | $A_{33}^1$ | $A_{33}^2$ | $A_{33}^3$ | $A_{33}^4$ | $A_{33}^5$ | $A_{33}^6$ | $A_{33}^7$ | $A_{34}^0$ | $A_{34}^1$ | $A_{34}^2$ | $A_{34}^3$ | $A_{34}^4$ | $A_{34}^5$ | $A_{34}^6$ | $A_{34}^7$ | $A_{00}^8$ | $A_{00}^9$ | | | | | | |
| 7 | $A_{01}^8$ | $A_{01}^9$ | | | | | | | $A_{02}^8$ | $A_{02}^9$ | | | | | | | $A_{03}^8$ | $A_{03}^9$ | | | | | | |
| 8 | $A_{04}^8$ | $A_{04}^9$ | | | | | | | $A_{10}^8$ | $A_{10}^9$ | | | | | | | $A_{11}^8$ | $A_{11}^9$ | | | | | | |
| 9 | $A_{12}^8$ | $A_{12}^9$ | | | | | | | $A_{13}^8$ | $A_{13}^9$ | | | | | | | $A_{14}^8$ | $A_{14}^9$ | | | | | | |
| 10 | $A_{20}^8$ | $A_{20}^9$ | | | | | | | $A_{21}^8$ | $A_{21}^9$ | | | | | | | $A_{22}^8$ | $A_{22}^9$ | | | | | | |
| 11 | $A_{23}^8$ | $A_{23}^9$ | | | | | | | $A_{24}^8$ | $A_{24}^9$ | | | | | | | $A_{30}^8$ | $A_{30}^9$ | | | | | | |
| 12 | $A_{31}^8$ | $A_{31}^9$ | | | | | | | $A_{32}^8$ | $A_{32}^9$ | | | | | | | $A_{33}^8$ | $A_{33}^9$ | | | | | | |
| 13 | $A_{34}^8$ | $A_{34}^9$ | | | | | | | | | | | | | | | | | | | | | | |

BC0      BC1      BC2

# EP 4 361 888 A1

Europäisches
Patentamt

European
Patent Office

Office européen
des brevets

## RAPPORT DE RECHERCHE EUROPEENNE

Numéro de la demande

EP 23 20 5542

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2019/392297 A1 (LAU HORACE H [US] ET AL) 26 décembre 2019 (2019-12-26) <br> * alinéa [0002] – alinéa [0157] * <br> * alinéa [0242] – alinéa [0244]; figure 30 * <br> * alinéa [0341] – alinéa [0403]; figures 16-20 * <br> ----- | 1-9 | INV. <br> G06N3/063 <br> G06N3/0464 |
| A | CHEN YIRAN ET AL: "A Survey of Accelerator Architectures for Deep Neural Networks", <br> ENGINEERING, [Online] <br> vol. 6, no. 3, 1 mars 2020 (2020-03-01), pages 264-274, XP055810329, <br> ISSN: 2095-8099, DOI: <br> 10.1016/j.eng.2020.01.007 <br> Extrait de l'Internet: <br> URL:https://www.sciencedirect.com/science/article/pii/S2095809919306356/pdfft?md5=c7995ab665f87deefb9753409f99216a&pid=1-s2.0-S2095809919306356-main.pdf> <br> * le document en entier * <br> ----- | 1-9 | |

DOMAINES TECHNIQUES RECHERCHES (IPC)

G06N

Le présent rapport a été établi pour toutes les revendications

| Lieu de la recherche | Date d'achèvement de la recherche | Examinateur |
|---|---|---|
| La Haye | 11 mars 2024 | Cilia, Elisa |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.......................................................................................
& : membre de la même famille, document correspondant

EPO FORM 1503 03.82 (P04C02)

9

## ANNEXE AU RAPPORT DE RECHERCHE EUROPEENNE
## RELATIF A LA DEMANDE DE BREVET EUROPEEN NO.

EP 23 20 5542

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-03-2024

| Document brevet cité au rapport de recherche | Date de publication | Membre(s) de la famille de brevet(s) | Date de publication |
|---|---|---|---|
| US 2019392297 A1 | 26-12-2019 | EP 3563304 A1 | 06-11-2019 |
| | | EP 3998539 A1 | 18-05-2022 |
| | | EP 4160449 A1 | 05-04-2023 |
| | | US 2019392297 A1 | 26-12-2019 |
| | | US 2022245438 A1 | 04-08-2022 |
| | | US 2023222331 A1 | 13-07-2023 |
| | | WO 2018126073 A1 | 05-07-2018 |

EPO FORM P0460

Pour tout renseignement concernant cette annexe : voir Journal Officiel de l'Office européen des brevets, No.12/82